## Europäisches Patentamt

## European Patent Office

## Office européen des brevets

(19)

(11) Veröffentlichungsnummer: **0 234 197**
**B1**

(12) **EUROPÄISCHE PATENTSCHRIFT**

(45) Veröffentlichungstag der Patentschrift:
24.10.90

(51) Int. Cl.⁵: **D21F 1/00**

(21) Anmeldenummer: **87100182.2**

(22) Anmeldetag: **09.01.87**

(54) Verfahren zum Flicken von Schadenstellen in Papiermaschinenbespannungen.

(30) Priorität: **10.01.86 DE 3600577**

(43) Veröffentlichungstag der Anmeldung:
**02.09.87 Patentblatt 87/36**

(45) Bekanntmachung des Hinweises auf die Patenterteilung:
**24.10.90 Patentblatt 90/43**

(84) Benannte Vertragsstaaten:
**AT CH DE ES FR GB LI SE**

(56) Entgegenhaltungen:
**US-A- 3 664 907**
**US-A- 3 681 841**
**US-A- 4 090 897**

(73) Patentinhaber: **SCAPA GROUP PLC, Cartmell Road, Blackburn Lancashire BB2 3SZ(GB)**

(72) Erfinder: **Waldvogel, Hartmut, Dr., Schumannstrasse 6, D-7410 Reutlingen 1(DE)**
Erfinder: **Borel, Georg, Kurt-Schumacher-Strasse 101/83, D-7410 Reutlingen 1(DE)**

(74) Vertreter: **Funge, Harry et al, M'CAW & CO. 41-51 Royal Exchange Cross Street, Manchester M2 7BD(GB)**

## Beschreibung

Die Erfindung betrifft ein Verfahren zum Flicken von Schadenstellen in Papiermaschinenbespannungen aus Kunststoffgeweben, insbesondere Blattbildungssieben und Trockensieben, die ganz oder teilweise aus Polyester-Monofilen gewebt sind.

Während die Laufzeit der bis 1968 nahezu ausschließlich verwendeten Phosphorbronze-Papiermaschinensiebe einige Tage oder Wochen betrug, beträgt die Laufzeit der Kunststoff-Papiermaschinensiebe das Mehrfache davon. Der Preis von Kunststoff-Papiermaschinensieben ist wesentlich höher als der von Phosphorbronze-Sieben. Durch die im Betrieb bisweilen entstehende Beschädigung von Kunststoff-Papiermaschinensieben ergeben sich daher erhebliche wirtschaftliche Nachteile. Es sind daher verschiedene Verfahren entwickelt worden, um Schadenstellen in Kunststoff-Papiermaschinensieben zu flicken. Bei größeren Rissen ist das Papiermaschinensieb nicht mehr zu retten, weil der Kräftefluß im Gewebe unterbrochen wird. Blattbildungssiebe übertragen Arbeitsleistungen im Bereich von 120 bis 150 kW/m Siebbreite. An Stellen, an denen die Längsdrähte in einer größeren Breite unterbrochen sind, bildet das Gewebe eine Längswelle oder sog. Röhre, so daß das Sieb unbrauchbar ist. Bei kleineren Schadenstelle mit einem Durchmesser von unter 10 mm, wie sie häufiger vorkommen, besteht bei den Papiermachern allgemein der Wunsch, das Papiermaschinensieb zumindest noch einige Zeit einzusetzen. Es muß daher versucht werden, derartige Schadenstellen zu flicken.

Ein einfaches Übernähen des Loches einer derartigen Schadenstelle mit Kunststoff- oder Metallfäden ist unwirksam, da diese Fäden sehr rasch durchgeschliffen werden. Eine andere Möglichkeit des Flickens derartiger Schadenstellen besteht im Kunststopfen. Hierzu werden einzelne Drähte rund um die Schadenstelle aus dem Sieb entfernt und durch Ersatzdrähte ersetzt, die aus einem Reserveabschnitt des gleichen Gewebes stammen und daher die gleichen Abkröpfungen wie die Drähte dieses Papiermaschinensiebes haben. Die Ersatzdrähte werden in Längsrichtung und in Querrichtung an der Schadenstelle in das Papiermaschinensieb eingezogen und so miteinander verflochten, daß an der Schadenstelle die ursprüngliche Gewebestruktur wieder hergestellt wird. Dieses Flickverfahren ergibt eine haltbare Flickstelle. Es ist jedoch sehr schwierig auszuführen, da es nur von geschulten und erfahrenen Fachleuten durchgeführt werden kann. Außerdem beansprucht dieses Flickverfahren sehr viel Zeit, so daß es nur in den seltensten Fällen angewendet werden kann. Üblicherweise übersteigen nämlich die Stillstandskosten der Maschine sehr bald den Wert des Papiermaschinensiebes.

Es sind auch Verfahren bekannt, bei denen die Schadenstelle mit einem Flickgewebe überklebt wird. Als Flickgewebe verwendet man dabei ein möglichst dünnes Gewebe, damit es auf der Papierseite des Papiermaschinensiebes nicht zu weit vorsteht und dadurch keine zu starken Markierungen oder sogar Löcher in der Papierbahn verursacht. Als Flickgewebe werden monofile Gewebe, mit Harz getränkte multifile Gewebe und offene Drehergewebe verwendet. Als Klebestoff werden handelsübliche Kunstharze, Hotmelts und Zweikomponentenkleber verwendet. Die Haltbarkeit derartiger Flickstellen ist unterschiedlich. Schwierigkeiten bereitet insbesondere die Dosierung des Klebstoffes, da einerseits eine ausreichende Haftung des Flickengewebes erzielt werden muß und andererseits möglichst wenig Maschen des Papiermaschinensiebes im Bereich der Schadenstelle verstopft werden sollen. Ein Fortschritt ist durch die Verwendung thermoplastischer Kleber erzielt worden. Hierbei wird das Flickgewebe in einer Vorbehandlung mit thermoplastischem Kunststoffharz getränkt. Der Flicken wird dann durch einfaches Aufbügeln in der Papiermaschine auf die Schadenstelle aufgebracht. Jedoch liegt auch hierbei die Haltbarkeit der Flickstelle nur im Bereich einiger weniger Tage. Der Flicken löst sich dann meistens ab und muß erneuert werden.

Man hat auch versucht, gelochte Klebstofffilme oder Klebstoff-Vliese einzusetzen. Auch hierbei konnte jedoch nicht verhindert werden, daß die feinen Maschen des Papiermaschinensiebes zufließen.

Mit einem gewissen Erfolg werden Schadenstellen in Papiermaschinensieben durch sog. Ultraschallschweißen geflickt. Hierbei wird ein Flicken aus Polyestergewebe auf die Schadenstelle aufgeschweißt, der im allgemeinen wesentlich größer als die Schadenstelle selbst ist und etwa den doppelten bis dreifachen Durchmesser der Schadenstelle hat. Die Verschweißung geschieht im allgemeinen entlang des Randes des Flickens. Bei diesen Verfahren sind entsprechende Geräte, insbesondere eine Ultraschallschweißmaschine und große Erfahrung Voraussetzung für einen haltbaren Flicken. Da sowohl das Material des Flickens als auch das des Papiermaschinensiebes an der Schweißnaht verschmolzen werden, ist eine exakte Dosierung der zugeführten Ultraschallenergie Voraussetzung für eine gute Haltbarkeit des Flickens. Wird zuwenig Ultraschallenergie zugeführt, so löst sich der Flicken wieder ab. Wird zuviel Ultraschallenergie zugeführt, so wird das Papiermaschinensieb-Gewebe beschädigt, so daß die Schadenstelle nur vergrößert wird. Beim Verschweißen von Polyester besteht außerdem ein allgemeines Problem darin, daß Polyester bei starker Erhitzung spröde wird. Die geflickte Schadenstelle besitzt daher nur eine geringe Zugbelastung. Die hauptsächliche Schwierigkeit bei diesem Flickverfahren besteht daher in der genauen Dosierung der Ultraschallenergie.

Das Ultraschallschweißen ist jedoch nur bei einlagigen Geweben anwendbar. Bei doppellagigen Geweben oder bei zwei- und mehrlagigen Geweben können Schadenstellen durch Aufbringen eines Flickens mittels Ultraschall nicht mehr repariert werden. Der Grund dafür liegt vermutlich darin, daß die Ultraschallimpulse von den mehreren Lagen der Schuß- und Kettfäden bzw. der mehreren Gewebelagen aufgenommen und so stark gedämpft werden, daß eine haltbare Verschweißung nicht mehr entsteht. Erhöht man den Anpreßdruck, so wird das Gewebe schlagartig durchgeschmolzen. Die erforderliche genaue Dosierung des Anpreßdruckes und der Ultraschallenergie ist daher bei doppellagigen oder mehrlagigen Geweben in der Praxis im allgemeinen nicht möglich. Wegen der höheren Kosten doppel- oder mehrlagiger Papiermaschinensiebe besteht jedoch gerade bei ihnen ein erhebliches Interesse an einem brauchbaren Verfahren zum Flicken von Schadenstellen.

Eine weitere Schwierigkeit besteht darin, daß das Flickengewebe möglichst dünn sein muß, damit es auf der Sieboberfläche sowenig wie möglich vorsteht und die Papierbahn so wenig wie möglich markiert. Dünne Flickengewebe werden jedoch insbesondere bei größeren Ausdehnungen der Schadenstelle durch das Vakuum der Sauger zur Laufseite hin eingezogen und schleifen sich rasch durch. Bei größeren Schadenstellen ist es daher zusätzlich erforderlich, innerhalb der Schadenstelle auf das Flickgewebe von unten her ein zusätzliches Gewebe aufzukleben, um die Abriebbeständigkeit der geflickten Schadenstelle zu verbessern.

Doppelsiebformer sind häufig so ausgebildet, daß nur ein Sieb angetrieben wird, während das zweite Sieb durch Reibung zwischen den Sieben mitgezogen wird. Durch diese Reibung zwischen den beiden Sieben werden auf die Oberfläche eines der Siebe aufgebrachte Flicken rasch abgeschält. Das gleiche kann auch bei normalen Papiermaschinen auftreten, wenn die erste außenliegende Siebleitwalze einen Hilfsantrieb hat und diese Siebleitwalze schneller läuft als das Papiermaschinensieb, was in der Praxis öfters vorkommt. Durch diese Siebleitwalze wird die Oberseite des Papiermaschinensiebes abgenutzt und werden insbesondere auf der Oberseite aufgeklebte Flicken sofort durchgeschliffen oder abgetragen.

Der Erfindung liegt die Aufgabe zugrunde, ein Verfahren zum Flicken von Schadenstellen in Papiermaschinenbespannungen zu schaffen, das auch für doppel- oder mehrlagige Papiermaschinenbespannungen und für Papiermaschinenbespannungen für den Einsatz in Doppelsiebformern, bei denen nur ein Sieb angetrieben wird, geeignet ist.

Diese Aufgabe wird dadurch gelöst, daß die Schadenstelle mit einem durch Strahlung aushärtbaren Harz ausgefüllt wird, die Schadenstelle mit Ausnahme einzelner Punkte bestrahlt wird, um die bestrahlten Bereiche zu vernetzen und die unvernetzten Bereiche des aushärtbaren Harzes ausgespült werden.

An den nicht bestrahlten Stellen oder Punkten tritt keine Vernetzung des aushärtbaren Harzes auf, so daß in diesen diesen Bereichen das Harz anschließend ausgewaschen werden kann. Der Flicken erhält dadurch die für eine Entwässerung der Papiermasse notwendige Durchlässigkeit.

Die Stellen oder Punkte, die nicht bestrahlt werden, sind so verteilt und in der Größe bemessen, daß das ausgehärtete Harz an der Schadenstelle möglichst weitgehend der Papierseite des Papiermaschinensiebes entspricht und insbesondere eine vergleichbare Entwässerungsleistung aufweist.

Als aushärtbares Harz kann insbesondere ein photosensitives Harz verwendet werden, das durch Bestrahlung mit UV-Licht vernetzt wird. Wie bei jeder Flickarbeit üblich, muß dabei die Schadenstelle zunächst sorgfältig gereinigt und getrocknet werden. Vorstehende beschädigte Drähte des Gewebes werden entfernt. Die Schadenstelle wird mit einer glatten Fläche unterlegt. Das photosensitive Harz wird in flüssiger Form auf die Schadenstelle in einer solchen Menge aufgebracht, daß das Loch der Schadenstelle selbst und ein Teil des angrenzenden Gewebes ausgefüllt wird. Auf die ausgefüllte Schadenstelle wird eine erste Maske aufgelegt, die zahlreiche einzelne lichtundurchlässige Flecken oder Punkte von etwa 0,8 bis 2,5 mm Durchmesser, vorzugsweise von l bis l,5 mm Durchmesser, aufweist. Die Maske kann eine entsprechend bedruckte Folie sein. Die Maske kann auch auf photographischem Weg hergestellt werden, wobei eine Aufnahme von der intakten Gewebeoberfläche mit einem photographischen Film gemacht wird, der an den geschwärzten Stellen UV-undurchlässig ist. Auf dem Film befindet sich dabei eine Wiedergabe der Papierseite des Gewebes im Maßstab l:l. Diese Abbildung dient als Maske. Durch eine zweite Maske wird die Fläche des Flickens begrenzt, die mit UV-Licht bestrahlt wird. In der Praxis wird also zweckmäßig ein Satz verschieden großer zweiter Masken vorrätig gehalten, von denen eine der Größe der Schadenstelle entsprechende ausgewählt wird und auf diese Weise die Größe der ausgehärteten Kunstharzfläche festlegt. Die Schadenstelle wird danach mittels einer UV-Lampe bestrahlt. Die Bestrahlungsdauer kann z.B. 4 Minuten betragen. Die beiden Masken und die Unterlage werden danach entfernt und die Schadenstelle wird mit Wasser ausgespült. Die vernetzten Bereiche des Harzes bleiben dabei erhalten, während die infolge der lichtundurchlässigen Punkte unvernetzten Bereiche sich ausspülen lassen. Dadurch wird die Fläche der Flickstelle durchlässig, so daß auch im Bereich der Flickstelle eine Blattbildung erfolgt.

Die durch die Erfindung erzielbaren Vorteile bestehen insbesondere darin, daß der Kunstharz-Flicken weder auf der Oberseite noch auf der Unterseite der Papiermaschinenbespannung vorsteht. Andererseits ist der Flicken jedoch dicker als die z.B. beim Ultraschallschweißen verwendeten Flickengewebe, so daß bei dem erfindungsgemäßen Verfahren die Abriebbeständigkeit besser ist. Das vernetzte Harz erfaßt die Drähte und Gewebeteile rund um die Schadenstelle und ist daher fest mit dem Gewebe der Papiermaschinenbespannung verbunden, so daß die Haltbarkeit des Flicken außerordentlich gut ist.

Als photosensitives Harz eignen sich insbesondere Acrylate, z.B. Epoxyacrylate, Urethanacrylate, Polyesteracrylate, Silikonacrylate und Methacrylate, oder ungesättige Polyester. Die Harze enthalten l bis 8 % Photoinitiatoren. Das Absorptionsmaximum der Photoinitiatoren entspricht dem Extinktionsmaximum der UV-Hochdrucklampe. Die Photoinitiatoren bilden bei der UV-Bestrahlung Radikale, die die Polymerisation auslösen. Die Aushärtung kann nach einem radikalischen oder kationischen Polymerisationsmechanismus eingeleitet werden. Gegebenenfalls können noch Inhibitoren in einer Menge von l bis 5 % zugesetzt werden. Für die Auslösung der photochemischen Reaktion können Quecksilber-Hochdrucklampen verwendet werden, die UV-Licht im UV-A-, UV-B- oder UV-C-Bereich erzeugen. Vorzugsweise wird UV-A-Strahlung einer Wellenlänge von 3l5 bis 380 nm verwendet. Zur Verbesserung der Zugfestigkeit und Haltbarkeit des Flickens können insbesondere in Längsrichtung einzelne Filamente zur Verstärkung eingelegt werden. Hierfür eignen sich insbesondere Kohlenstoffasern oder andere hochfeste Fasern, z.B. Aramidfasern (Kevlar, Twaron – eingetragenes Warenzeichen) oder Polyesterfasern. Die Verstärkung kann auch durch Einlegen eines zugeschnittenen Gewebestückes, das mit dem Siebgewebe identisch ist und genau in die Schadstellenöffnung paßt, oder von feinem Gewebe erfolgen. Das Einlegen einzelner Fäden in Längsrichtung ist jedoch im allgemeinen vorteilhafter. Auf diese Weise wird die Kraftübertragung innerhalb der Flickstelle verbessert und die Bildung von Wellen oder Röhren verhindert.

Als aushärtbares Herz kann auch ein elektronenstrahlhärtendes Harz (Prepolymeres) verwendet werden. Die einzelnen Verfahrensschritte können dabei ähnlich sein wie bei der Verwendung eines photosensitiven Harzes, indem mittels Masken gearbeitet wird, die für Elektronenstrahlen undurchlässig sind. Man arbeitet dabei mit einer flächenhaften Bestrahlung der Schadenstelle. Daneben besteht auch die Möglichkeit, mit einer scharf gebündelten Elektronenstrahlquelle zu arbeiten, mit der zeilenförmig oder rasterartig die Schadenstelle so abgefahren wird, daß an der Schadenstelle die gewünschte, die intakte Gewebeoberfläche nachahmende Struktur aus dem aushärtbaren Harz entsteht. Die Punkte oder Stellen, an denen später durch Auswaschen des Harzes den Maschenöffnungen entsprechende Öffnungen entstehen sollen, können dabei durch Umfahren dieser Punkte und Stellen oder durch kurzzeitiges Abschalten der Elektronenstrahlquelle erzeugt werden.

Nach dem erfindungsgemäßen Verfahren können während des Einsatzes des Siebes in der Papiermaschine entstandene Schadenstellen beseitigt werden. Das Verfahren bietet sich gleichfalls zum Ausbessern von Beschädigungen an, die bereits während der Herstellung des Gewebes beim Hersteller des Siebes entstanden sind, z.B., wenn das Gewebe während der Herstellung lochartige Beschädigungen erhält.

Ein Ausführungsbeispiel der Erfindung wird nachfolgend anhand der Zeichnung erläutert. Es zeigen:

Fig. l im Schnitt die Schadenstelle einer Papiermaschinenbespannung mit den aufgelegten Masken;
Fig. 2 die Schadenstelle mit den aufgelegten Masken in Draufsicht und
Fig. 3 die geflickte Schadenstelle im Schnitt.

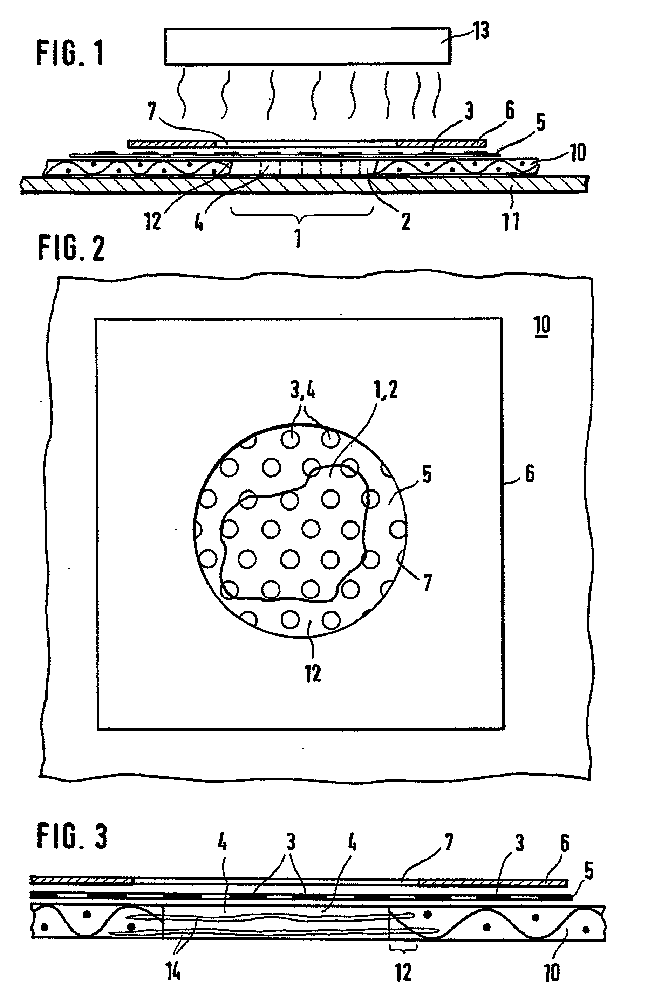

In Fig. l ist die Schadenstelle l innerhalb des Gewebes eines Kunststoff-Papiermaschinensiebes l0 im Vertikalschnitt dargestellt. Die Schadenstelle ist mit photosensitivem Harz 2 ausgefüllt. Von unten wird die Schadenstelle l durch eine glatte Stützfläche ll abgestützt, die ein Ausfließen des Harzes 2 nach unten verhindert. Das Harz 2 befindet sich nicht nur innerhalb des Loches der Schadenstelle l, sondern kriecht auch in den Rand der Schadenstelle l, wodurch nach der Vernetzung eine feste Verbindung mit dem Papiermaschinensieb l0 erreicht wird. Auf die Schadenstelle wird nach dem Ausfüllen mit Harz 2 eine erste Maske 5 aufgelegt, die eine Vielzahl lichtundurchlässiger Punkte 3 mit einem Durchmesser von etwa l bis l,5 mm und einem etwa gleichgroßen Abstand voneinander aufweist. Auf die erste Maske 5 wird eine zweite Maske 6 gelegt, die als Blende fungiert und eine Öffnung 7 aufweist, die etwas größer als die Schadenstelle l ist. Die zweite Maske 6 begrenzt die bestrahlte Fläche, damit am Rand der Schadenstelle l das Harz 2 nur in einem Randstreifen l2 (Fig. 2) bestrahlt und vernetzt wird, der gerade ausreicht, um eine sichere Verbindung des Flickens mit dem Papiermaschinensieb l0 sicherzustellen.

Durch eine UV-Lampe l3 wird das Harz 2 durch die beiden Masken 5, 6 hindurch bestrahlt. Die Bestrahlungsdauer hängt von der Art des photosensitiven Harzes, dem Anteil der Photoinitiatoren und eventuellen Inhibitoren ab. Selbstverständlich hängt sie auch von der Strahlungsintensität und der Wellenlänge ab. Zweckmäßig ist eine Wellenlänge im Bereich der UV-A-Strahlung (3l5 bis 380 nm). Die Bestrahlungsdauer kann z.B. 4 Minuten betragen.

Nach der Bestrahlung werden die Masken 5, 6 und die Stützfläche ll entfernt und wird die Schadenstelle l und der angrenzende Bereich mit Wasser gut gespült. Die durch die Masken abgedeckten Bereiche des Harzes 2 sind nicht vernetzt und werden daher durch das Wasser ausgespült. Der Flicken erhält dadurch eine Vielzahl von Öffnungen, die ihm eine Durchlässigkeit verleihen, die mit der des Papiermaschinensiebes l0 vergleichbar ist. Die Durchlässe entstehen an den Stellen der lichtundurchlässigen Punkte 3 der ersten Maske 5.

Wie in Fig. 3 gezeigt ist, können in das Harz 2 noch insbesondere in Längsrichtung verlaufende Fäden l4 hoher Zugfestigkeit eingelegt werden, z.B. Kohlenstoffasern oder Kevlar-Monofilamente.

**Patentansprüche**

l. Verfahren zum Flicken von Schadenstellen in Papiermaschinenbespannungen, dadurch gekennzeichnet,
daß die Schadenstelle (l) mit einem durch Strahlung aushärtbaren Harz (2) ausgefüllt wird;
daß die Schadenstelle (l) mit Ausnahme einzelner Punkte (3) bestrahlt wird, um die bestrahlten Bereiche zu vernetzen, und
daß die unvernetzten Bereiche (4) des aushärtbaren Harzes (2) ausgespült werden.

2. Verfahren nach Anspruch l, dadurch gekennzeichnet, daß das aushärtbare Harz (2) photosensitiv ist und daß das Bestrahlen der Schadenstelle (l) durch eine Maske (5) hindurch erfolgt, die einzelne lichtundurchlässige Punkte (3) aufweist.

3. Verfahren nach Anspruch l oder 2, dadurch gekennzeichnet, daß eine erste Maske (5) verwendet wird, die lichtundurchlässige Punkte (3) mit einem Durchmesser von 0,8 bis 2,5 mm aufweist.

4. Verfahren nach Anspruch 3, dadurch gekennzeichnet, daß die lichtundurchlässigen Punkte (3) einen Durchmesser von l bis l,5 mm aufweisen.

5. Verfahren nach einem der Ansprüche 2 bis 4, dadurch gekennzeichnet, daß eine zweite Maske (6) verwendet wird, die eine Öffnung (7) aufweist, die etwas größer als die Schadenstelle ist.

6. Verfahren nach Anspruch l, dadurch gekennzeichnet, daß das aushärtbare Harz (2) ein elektronenstrahlhärtendes Prepolymere ist und daß die Schadenstelle (l) mittels eines Elektronenstrahlers bestrahlt wird, der unter Aussparung der Punkte (3) über die Schadenstelle (l) geführt wird.

## Claims

1. Method for repairing defects in paper-making machine coverings, characterised in that the defect (1) is filled with a resin (2) which can be hardened by radiation, that with the exception of individual points (3), the defect (1) is irradiated in order to cross-link the irradiated areas, and that the areas (4) of the hardenable resin (2) which are not cross-linked, are rinsed away.

2. Method according to Claim 1, characterised in that the hardenable resin (2) is photosensitive and that the irradiation of the defect (1) takes place through a mask (5), which has individual points (3) which are impermeable to light.

3. Method according to Claim 1 or 2, characterised in that a first mask (5) is used, which comprises points (3) having a diameter of 0.8 to 2.5 mm, which are impermeable to light.

4. Method according to Claim 3, characterised in that the points (3) which are impermeable to light have a diameter of 1 to 1.5 mm.

5. Method according to one of Claims 2 to 4, characterised in that a second mask (6) is used, which comprises an opening (7) which is somewhat larger than the defect.

6. Method according to Claim 1, characterised in that the hardenable resin (2) is a prepolymer hardening under the action of an electron beam and that the defect (1) is irradiated by means of an electron emitter, which is guided over the defect (1) omitting the points (3).

## Revendications

1. Méthode de réparation des défectuosités des draps de machines à papier, caractérisée en ce que la défectuosité (1) est remplie d'une résine (2) qui peut être durcie par irradiation, en ce que, à l'éxception de points distincts (3), la défectuosité (1) est irradiée de manière à réticuler les zones irradiées, en ce que les zones (4) de la résine durcissable (2) qui ne sont pas réticulées sont éliminées par rinçage.

2. Méthode selon la revendication 1, caractérisée en ce que la résine durcissable (2) est photosensible et en ce que l'irradiation du défaut (1) est réalisée au travers d'un masque (5) qui présente des points distincts (3) qui sont imperméables à la lumière.

3. Méthode selon la revendication 1 ou 2, caractérisée en ce qu'un premier masque (5) est utilisé, qui comporte des points (3) ayant un diamètre de 0,8 à 2,5 mm, qui sont imperméable à la lumière.

4. Méthode selon la revendication 3, caractérisée en ce que les points (3) qui sont imperméables à la lumière ont un diamètre de 1 à 1,5 mm.

5. Méthode selon l'une des revendications 2 à 4, caractérisée en ce qu'on utilise un second masque (6) qui comporte une ouverture (7) qui est un peu plus importante que la défectuosité.

6. Méthode selon la revendication 1, caractérisée en ce que la résine durcissable (3) est un prépolymère se durcissant sous l'action d'un faisceau d'électrons et en ce que la défectuosité (1) est irradiée au moyen d'un émetteur électronique qui est dirigé sur la défectuosité (1) en omettant les points (3).

FIG. 1

FIG. 2

FIG. 3